Europäisches Patentamt

(19) **European Patent Office**

Office européen des brevets

(11) Publication number: **0 013 725**
**A1**

(12) # EUROPEAN PATENT APPLICATION

(21) Application number: **79105026.3**

(22) Date of filing: **10.12.79**

(51) Int. Cl.³: **G 01 B 11/14, G 01 B 11/08**

(30) Priority: **02.01.79 US 238**

(43) Date of publication of application: **06.08.80**
**Bulletin 80/16**

(84) Designated Contracting States: **DE FR GB IT**

(71) Applicant: **ALLIED CHEMICAL CORPORATION, Columbia Road and Park Avenue P.O. Box 2245R (Law Dept.), Morristown New Jersey 07960 (US)**

(72) Inventor: **Carlson, Charles Elwood, 26 Corn Hollow Road, Succasunna New Jersey 07876 (US)**
Inventor: **Kath, Gary Scott, R.D. No.2, Box 113 Colts Neck Road, Farmingdale New Jersey 07727 (US)**

(74) Representative: **Baillie, Iain Cameron, c/o Ladas & Parry Blumenstrasse 48, D-8000 München 2 (DE)**

(54) **Remote width measurement system.**

(57) A remote width measurement system for determining the extension of a variation in optical density is disclosed. An expanded laser beam is translationally displaced by a rotating biplanar glass piece (20) for sweeping the width of a variation in optical density (22). The laser signal is then detected and the resulting signal is processed through a current-voltage converter (28), a positive and a negative peak follower circuit (32, 34), and a comparator (46). The comparator output (50) is convoluted with a 800 kHz signal in an AND gate (58) and its output (56) is fed to a counter (62), which in turn feeds a display (64) indicating the width of the variation in optical density.

DESCRIPTION

REMOTE WIDTH MEASUREMENT SYSTEM

Field of the Invention

The present invention relates to a device for remote measurement of widths and more particularly to determine the spacing of gaps between a rotating surface and a second surface.

Background of the Invention

In the process of flow casting of liquid alloys to obtain glassy metal filaments the spacing between crucible orifice and casting wheel surface has to be closely controlled in order to obtain a homogeneous filament. High temperatures and surface speeds in this region preclude the use of ordinary contacting type width measuring devices and lead to the requirement of a remote measurement.

Zanoni in U.S.P. 3,853,406 discloses a differential optical noncontacting diameter gauge utilizing a pair of linearly scanning light beams sequentially scanning the test piece. The two parallel, offset scanning laser beams are produced by reflecting two laser beams separated by a preset angle from a uniformly rotating mirror or multifaceted prism, placed in the focus of a lens.

Zanoni in U.S.P. 3,961,838 discloses an apparatus for producing a scanning laser beam of constant linear velocity by reflecting a laser beam from a uniformly rotating mirror to produce a rotationally scanned beam of uniform angular velocity.

Zanoni in U.S.P. 3,856,411 discloses an optical noncontacting diameter gauge employing a beam of laser light from a rapidly oscillating mirror, which is scanned across the test object.

## Summary of the Invention

A measurement system for determining the extension of a variation in optical density comprises a source means for providing a substantially parallel light beam. The light beam is essentially continuously transposed in a direction normal to its propagation direction by a rotating shifting means. A detection means is provided for receiving the shifted light beam scanning the width of the variation in optical density.

## Brief Description of the Drawing

Fig. 1 is a schematic view of the measurement system for determining the extension of a variation in optical density.

Fig. 2 is a schematic view of a diagram of the signal processing system.

## Detailed Description of the Invention

A system is provided for remotely measuring the width of a variation in optical density. Such variation may be provided by a gap between two opposing objects such as two adjacent plates, by a moving strip or by a stream of liquid.

A source means provides a parallel light beam which is essentially continuously transposed in a direction normal to its propagation direction by a rotating shifting means. The light source can be any source capable of providing a suitable intensity of parallel light. Preferred sources are sources providing coherent light such as lasers. The light source can be a laser such as a helium neon laser. When a laser is employed as the light source in the present invention, preferably a beam expanding system is simultaneously employed. The beam expander can comprise an optical system comprising a defocussing and a focussing element such as concave and convex lenses or corresponding mirrors.

Such beam expanding system can comprise a concave lens located relatively close to the laser and a convex lens located relatively close to the rotating shifting means. The system can comprise also a filter located in the front of the detection means capable of essentially passing the laser light but removing light of most other frequencies.

The rotating shifting means for the parallel light beam comprises a transparent optical element having parallel faces and rotating about an axis. The rotation can be provided by an electrical motor. The rotation axis of the shifting means is normal to the propagation direction of the parallel light beam. The two parallel faces deflect the parallel light beam in opposite directions. The two parallel faces include a Vector which is parallel to the rotation axis of the rotating shifting means. The two parallel faces should be about equidistant from the rotation axis.

Preferably, the two parallel deflecting faces are provided by an isotropic optical material having low optical density, an index of refraction much higher than ambient and they should be capable of providing well polished faces. Preferably, such material is also stable against laser damage. Preferred materials for such a medium include optical glasses. Preferably the two parallel faces have a deviation from being parallel of less than 150 microradians (150 μ rad), 30 inches. Preferably the surface of the glass element is flat to better than half of a wavelength of the light employed. A detection means receives the shifted light beam scanning the width of the variation in optical density.

The detection means can be any available detector for the optical frequency employed. Preferred detectors include photodiodes, photoconductors and photomultiplier tubes. The detectors respond to light with generating an electrical signal.

The signal from the detection means is then processed for obtaining a voltage essentially dependent on the light intensity. This voltage is determined at each instant and then the time is determined during which the beam intensity detected corresponds to the variation in optical density, the width of which is to be determined.

The remote width measurement system comprises a signal processing unit. Such signal processing unit can include a current to voltage converter connected to the detection means, e.g. if the detection means is a photodiode, a positive and a negative peak follower connected to the current to voltage converter, a resistive network connected to the positive and negative peak follower for providing an average detection level and a comparator connected to the resistive network and to the current to voltage converter for comparing the average detection level with the signal.

Preferably the output of the comparator and a high frequency source are connected to the inputs of an AND gate and a counter is connected to the output of the AND gate. The counter output can be shown on a display means. Preferably a reset means is connected to the input of the AND gate and the counter for resetting the counting system.

The remote and noncontacting measurement of a width according to the present invention is performed by sweeping an essentially parallel light beam at a known constant velocity across a variation in optical density such as a gap, and measuring the time period during which the beam passes through the variation. The level of the parallel light beam on the far side of the variation in optical density is sensed by the detection means. By knowing the beam sweep velocity and the time the beam takes to traverse the variation in optical density, the width of the variation in optical density can be calculated.

### Optical System

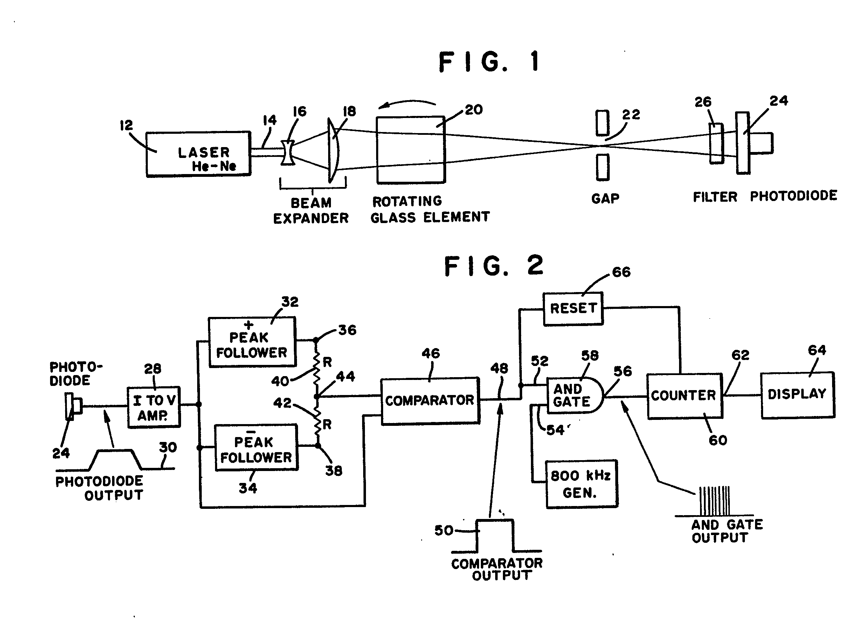

Referring now to Fig. 1 there are shown the elements of a laser beam generating, focussing and sweeping system. A laser 12 generates a collimated beam 14. This laser beam 14 then passes through a beam expander which consists of two lenses 16 and 18. To achieve a suitable small focussed spot diameter it is necessary to expand the laser beam before focussing it, and this is the primary function of the beam expander. The above-mentioned lenses give a beam expansion of about 5 times. The beam expander also allows the beam to be focussed at the gap to be measured by varying the spacing between the two lenses. After passing through the beam expander, the light beam passes through a glass element 20 or cube which rotates about an axis which is perpendicular to the optical path. This rotating glass element causes the output beam to translate relative to the incoming beam. The amount of translation between an incoming and an outgoing light ray is proportional to the angle of rotation for small rotational angles O, by way of the following equation wherein O is the angle between the incident beam and the normal to the incident plane; O' is the angle between the beam inside the glass element and the normal to the incident plane; t is the thickness of the glass element, n is the index of refraction of the ambient; n' is the index of refraction of the glass; and disp is the distance between the parallel incoming and outgoing beams:

$$n \ \sin \theta = n' \sin \theta'$$

$$disp = \frac{t}{\cos \theta'} \ \sin (\theta - \theta')$$

For small angles $\cos \theta' \approx 1$

and $\sin (\theta - \theta') \approx \theta - \theta'$

$$\therefore \quad n \ \theta = n' \ \theta'$$

$$disp = t(\theta - \theta') = t \ \theta \ (1 - \frac{n}{n'})$$

$$\frac{d(disp)}{dt} = v = t \ \frac{d \ \theta}{dt} \ (1 - \frac{n}{n'})$$

This also means that the beam velocity is proportional to the rotational velocity $\frac{d \ (\theta)}{dt}$ again for small angles.

The element is rotated by a motor. The resulting beam sweep velocity is essentially constant over the distance of the gap. Since two beam sweeps are generated for one complete revolution of the glass element, the beam sweeps across the gap twice the rotation frequency. For the system to operate successfully, the spot size must be smaller than the gap to be measured.

After passing through the gap 22 the laser beam passes through a narrow bandpass filter 26 and is intercepted by a photodiode 24. The filter 26 passes the laser beam 14 and blocks light from other sources to maximize the signal to noise ratio at the detector.

## Signal Processing and Display

The signal produced by the photodiode is processed by the circuitry shown in Fig. 2. The photodiode 24 produced a current proportional to the light energy falling on the photodiode. The output of the photodiode is converted to a voltage signal by a current to voltage amplifier 28.

Since the focussed laser beam is of finite diameter, when the beam crosses the edges of the gap 22, the light intensity falling on the photodiode 24 does not rise or fall instantaneously but has a small but significant rise and fall time. As a result, the signal produced by the photodiode has the general shape shown at 30 in Fig. 2. To accurately measure the width of the pulse it is necessary to measure the width at certain amplitude points.

The amplitude point level is determined by the positive 32 and negative 33 peak followers and the voltage divider network formed by the two identical resistors 'R'. The output voltage of the positive peak follower equals the most positive level of the signal from the photodiode amplifier, and the negative peak follower 34 does the same for the most negative level. These two voltage levels are connected to the opposite ends 36, 38 of a voltage divider formed by identical resistors 40, 42, and the voltage at the center 44 of the divider is thus midway between the two input voltages. For example, if the most positive and most negative voltage levels from the photodiode amplifier are +6v. and +1v., the output voltage from the voltage divider is 3.5v.

This signal and the signal from the photodiode amplifier are compared in a comparator 46, which produces an output pulse having a short rise and fall time. E.g. the output 48 is high when the voltage from the photodiode amplifier exceeds the amplitude point level as determined by the positive and negative peak followers and the voltage divider. The net result is that a square-edged pulse is produced which has the same time duration as the photodiode pulse measured at the amplitude points.

The output 48 of the comparator is used to gate pulses from a pulse generator 50. The output of the comparator is connected to one input 52 of a 2-input AND gate 58, and a continuously running pulse generator 50 is connected to the other input 54. When the signal from the comparator 46 is high, the pulses from the pulse generator 50 are transmitted to the output 56 of the AND gate 58. The number of pulses from the pulse generator 50 passed to the output 56 of the AND gate 58 is thus proportional to the time duration of the pulse produced by the comparator 46. The frequency is chosen so that the number of pulses passed by the AND gate correspond to a multiple of the measured gap.

The pulses from the AND gate 58 are counted by a counter 60, and the output 62 of the counter is displayed on a display 64. By appropriate choice of beam sweep speed and clock rate the number displayed is the gap width. A reset circuit 66 sets the counter 60 to zero after each pulse from the comparator 46.

## Example

The apparatus shown in Figs. 1 and 2 was employed. The laser 12 was a helium neon laser operating at a wavelength of 632.8 nm. The diameter of beam 14 was about 1 mm.

The first lens 16 was biconcave and had a focal length of -5 mm and the second lens 18 was a plano-convex lens of a 25 mm focal length. The glass element 20 was a glass rod of crown glass with an index of refraction of 1.521, and the opposite faces of this glass element were flat and parallel to each other. The length "t" of the element is 31.47 millimeters (31.47 mm), 1.239 in., and the element was rotated at 1800 revolutions per minute (1800 r/min) by a hysteresis synchronous motor. The resulting beam sweep velocity was 2.032 meters/ second (2.032 m/s), 80 in/sec, and was essentially constant over a distance of 2.5 mm. Since two beam sweeps were generated for one complete revolution of the glass element, the beam swept across the gap 3600 times per minute or 60 times per second.

For a beam focussed at a point 38 centimeters (38 cm), 15 inches, from the beam expander the minimum spot size was about 125 micrometers (125µ m), 0.005 in. For the system to operate successfully, the spot size had to be smaller than the gap to be measured. Therefore the range of gaps that could be measured accurately were about 125 micrometers (125µ m) to 2.5 millimeters (2.5 mm), 0.005 in. to 0.100 in. The center wavelength of the filter 26 was 632.8 nm, the HeNe laser wavelength. The filter 26 passed the laser beam 14 and blocked light from other sources to maximize the signal to noise ratio at the detector. To accurately measure the width of the pulse generated by the photodiode, it was necessary to measure the width at the 50% amplitude points.

The 50% level was determined by the positive 32 and negative 33 peak followers and the voltage divider network formed by the two identical resistors 'R'.

The output 48 was high when the voltage from the photodiode amplifier exceeded the 50% voltage level as determined by the positive and negative peak followers and the voltage divider. The net result was that a square-edged pulse has been produced which had the same time duration as the photodiode pulse measured at the 50% amplitude points.

The output 48 of the comparator was used to gate pulses from an 800 kHz pulse generator 50. The output of the comparator was connected to one input 52 of a 2-input AND gate 58, and a continuously running 800 kHz pulse generator 50 was connected to the other input 54. The number of pulses from 800 kHz generator 50 passed to the output 56 of the AND gate 58 was thus proportional to the time duration of the pulse produced by the comparator 46. The 800 kHz frequency was chosen .so that the number of pulses passed by the AND gate corresponded to 10 times the measured gap in thousandths of an inch. For example: for a 304.8 micrometer (304.8μ m), 0.012 inch, gap and a beam sweep velocity of 2.032 meters/second (2.032 m/s), 80 inches/ second, the time duration of the pulse from the comparator was $1.5 \times 10^{-4}$ seconds. At $8 \times 10^5$ pulses per second, 120 pulses were passed through the AND gate 58. This number was 10 times the gap measured in thousandths of an inch.

The pulses from the AND gate 58 were counted by a counter 60, and the output 62 of the counter was displayed on a 3 digit LED display 64. By positioning the decimal point in the display 64 between the center and right-hand digit, the number displayed was the gap in thousandths of an inch. For example, a count of 147 pulses would be displayed as 14.7, the least significant digit representing tenths of thousandths of an inch.

0013725

We claim:

1. A measurement system for determining the extension of a variation in optical density comprising

source means for providing a substantially parallel light beam;

rotating transparent shifting means with parallel faces for essentially continuously transposing the parallel light beam normal to its propagation direction; and

detection means for receiving the shifted light beam scanning the width of the variation in optical density.

2. The measurement system as set forth in claim 1 wherein the source means is a laser.

3. The measurement system as set forth in claim 2 further comprising a concave lens located relatively close to the laser and a convex lens located relatively close to the rotating shifting means for expanding the diameter of the laser beam.

4. The measurement system as set forth in claim 1 wherein the rotating shifting means comprises two plane optical deflecting faces.

5. The measurement system as set forth in claim 4 wherein the two plane optical deflecting faces are about equidistant from the rotational axis and wherein the shifting means and the parallel end faces comprise rotating transparent glass which is polished to a half wavelength.

6. The measurement system as set forth in claim 1 wherein the detection means is a photodiode.

7. The measurement system as set forth in claim 1 further comprising a signal processing unit connected to the detection means, a current to voltage converter connected to the detection means;

a positive peak follower connected to the current to voltage converter;

a negative peak follower connected to the current to voltage converter;

a resistive network connected to the positive and the negative peak followers for providing an average detection level; and

a comparator connected to the resistive network and to the current to voltage converter for comparing the average detection level with the signal.

8.    The measurement system as set forth in claim 7 further comprising

a stable frequency source;

an AND gate having its inputs connected to the comparator and to the high frequency source and having an output;

a counter connected to the output of the AND gate.

9.    The measurement system as set forth in claim 7 further comprising reset means connected to the input of the gate and to the counter.

10.    The measurement system as set forth in claim 7 further comprising display means connected to the counter means.

# FIG. 1

LASER He-Ne (12, 14, 16, 18)
BEAM EXPANDER
ROTATING GLASS ELEMENT (20)
GAP (22)
FILTER (26)  PHOTODIODE (24)

# FIG. 2

PHOTO-DIODE (24)
I TO V AMP. (28)
PHOTODIODE OUTPUT (30)
+ PEAK FOLLOWER (32)
− PEAK FOLLOWER (34)
R (36, 40, 42, 38)
COMPARATOR (46, 44, 48)
COMPARATOR OUTPUT (50)
RESET (66)
AND GATE (52, 58, 54, 56)
800 kHz GEN.
AND GATE OUTPUT
COUNTER (62, 60)
DISPLAY (64)

0013725

| Category | Citation of document with indication, where appropriate, of relevant passages | Relevant to claim | CLASSIFICATION OF THE APPLICATION (Int. Cl.) |
|---|---|---|---|
| | US – A – 4 037 968 (MONSANTO CO.) <br> * whole document * | 1,2,4, <br> 5,7,10 | G 01 B 11/14 <br> G 01 B 11/08 |
| | –– | | |
| | GB – A – 1 504 331 (A.R.L. ROSS) <br> * whole document * | 1 | |
| | –– | | |
| | GB – A – 1 400 253 (T.I. LTD.) <br> * claim 1; fig. 4 * | 1,4,5 | |
| | –– | | **TECHNICAL FIELDS SEARCHED (Int.Cl.)** |
| | US – A – 3 854 052 (WESTERN ELECTRIC) <br> * fig. 1a * | 3 | |
| | –– | | G 01 B 11/00 |
| D | US – A – 3 853 406 (ZYGO CORP.) <br> * whole document * | | G 01 D 5/26 <br> G 02 B 27/17 |
| | –– | | |
| D | US – A – 3 961 838 (ZYGO CORP.) <br> * whole document * | | |
| | –– | | |
| D | US – A – 3 856 411 (ZYGO CORP.) <br> * whole document * | | |
| | –––– | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X| The present search report has been drawn up for all claims

| Place of search | Date of completion of the search | Examiner |
|---|---|---|
| Berlin | 30-04-1980 | KÖHN |

EPO Form 1503.1 06.78